# EUROPÄISCHE PATENTSCHRIFT

(11) **EP 2 167 338 B1**
(45) Veröffentlichungstag und Bekanntmachung des Hinweises auf die Patenterteilung: **28.12.2011**
(21) Anmeldenummer: 08774885.1
(22) Anmeldetag: 08.07.2008
(51) Int. Cl.: B60J 5/04

(54) **TÜR EINES KRAFTFAHRZEUGES**
DOOR OF A MOTOR VEHICLE
PORTE DE VEHICULE AUTOMOBILE

(30) Priorität: 09.07.2007 DE 102007032143; 25.09.2007 DE 102007045976
(43) Veröffentlichungstag der Anmeldung: 31.03.2010
(73) Patentinhaber: ThyssenKrupp System Engineering GmbH, 74076 Heilbronn (DE)
(72) Erfinder: WEITER, Peter, 66706 Borg (DE); BRAUN, Michael, 66773 Schwalbach (DE)
(74) Vertreter: Dahlkamp, Heinrich-Leo
(86) Internationale Anmeldenummer: PCT/EP2008/058840
(87) Internationale Veröffentlichungsnummer: WO 2009/007364

(56) Entgegenhaltungen:
- EP-A- 1 142 737
- EP-A- 1 803 596
- WO-A-2004/108481
- DE-T2- 60 101 917

## Beschreibung

Die Erfindung betrifft eine Tür eines Kraftfahrzeuges, umfassend ein Außenblech, ein Innenblech, einen auf der Türinnenseite angeordneten plattenförmigen Träger für verschiedene An- und Einbauaggregate sowie Verstärkungsbereiche für Türfunktionselemente und einen eingebauten Versteifungsträger als Seitenaufprallschutz.

Türen dieser oder ähnlicher Art sind in verschiedenen Ausführungen bekannt. Solche Türen müssen für die Fahrzeuginsassen einen guten Schutz bei einem Seitenaufprall bieten. Darüber hinaus müssen sie die Möglichkeit bieten, in ihnen verschiedene Aggregate, wie Fensterhebermechanik, Lautsprecher und dgl., unterzubringen.

Bei einer aus der Praxis bekannten Tür der eingangs genannten Art umfasst das tiefgezogene Innenblech den Träger für verschiedene An- und Einbauaggregate. Damit sich für diese Aggregate eine genügende Einbautiefe ergibt, muss das Innenblech aus gut tiefziehfähigem Stahl bestehen. Ein solcher Stahl trägt allerdings zur Versteifung der Tür nur wenig bei. Deshalb ist als Seitenaufprallschutz an dem Türinnenblech ein eigenständiger Versteifungsträger aus hochfestem Stahlblech angebracht. Darüber hinaus sind in den Verstärkungsbereichen für die Türfunktionselemente, wie Scharniere und Schloss, Profilelemente aus hochfestem Stahl angebracht. Eine solche Tür ist wegen der Vielzahl der zusammenzubauenden Einzelelemente aufwendig zu fertigen. Auch ist ihr Verhältnis von Steifigkeit und Gewicht nicht optimal. Bei einer anderen, aus der Patentliteratur bekannten Tür eines Kraftfahrzeuges (DE 10 2005 009 179 A1) ist der als Seitenaufprallschutz dienende Versteifungsträger am Außenblech der Tür angebracht. Der plattenförmige Träger für die verschiedenen An- und Einbauaggregate besteht aus Kunststoff und ist als Hybridbauteil mit einem metallischen Rahmen geformt. Der metallische Rahmen gibt diesem Hybridbauteil die für die An- und Einbauaggregate benötigte Bautiefe und umfasst die Verstärkungsbereiche für Türfunktionselemente. Dieses Hybridbauteil ist mit dem Türaußenblech bevorzugt durch Verschraubung fest verbunden und soll einen wesentlichen Beitrag zur Türsteifigkeit leisten.

Bei einer anderen aus der Patentliteratur bekannten Tür eines Kraftfahrzeuges (DE 10 2005 030 507 A1) bildet ein rahmenförmiges Verstärkungselement mit dem Außenblech und Innenblech eine Türstruktur. Dafür ist dieses Element mit dem Außen- und Innenblech durch Fügeverbindungen, wie Punktschweißen, fest verbunden. Das Verstärkungselement besteht aus hochfestem Stahl und kann durch Warmumformung hergestellt sein. An ihm sind integral die Verstärkungsbereiche für Scharniere und Schloss ausgebildet. Ein Versteifungsträger als Seitenaufprallschutz verläuft diagonal durch den Rahmen und ist integraler Bestandteil des Rahmens. Zusätzlich zu diesem zwischen dem Außen- und Innenblech angeordneten Verstärkungselement kann ein Träger für verschiedene An- und Einbauaggregate in die Tür eingebaut werden. Aus dem Stand der Technik ergibt sich allerdings nicht, wie ein solcher Träger ausgebildet ist.

Schließlich ist aus der Patentliteratur (DE 10 2005 005 684 A1) ein zum Verstärkungselement der vorbeschriebenen Tür sehr ähnliches rahmenförmiges Verstärkungselement bekannt, das ebenfalls aus hochfestem Stahlblech durch Warmumformen hergestellt ist. Dieses Verstärkungselement weist ebenfalls als integrale Bestandteile Verstärkungsbereiche für das Türschloss und die Türscharniere sowie als Seitenaufprallschutz einen diagonal durch den Rahmen verlaufenden Versteifungsträger auf. Ein solches Verstärkungselement ist zwischen dem Außenblech und dem Innenblech der Kraftfahrzeugtür angeordnet. Mit der Unterbringung von An- und Einbauaggregaten beschäftigt sich dieser Stand der Technik nicht.

DE 60101917 offenbart den Oberbegriff des Patent Anspruchs 1.

Der Erfindung liegt die Aufgabe zugrunde, eine Tür für ein Kraftfahrzeug zu schaffen, die eine hohe Eigensteifigkeit mit Seitenaufprallschutz aufweist und bei der bei geringem Fertigungsaufwand An- und Einbauaggregate untergebracht werden können.

Diese Aufgabe wird erfindungsgemäß bei einer Tür der eingangs genannten Art dadurch gelöst, dass das Innenblech und der Versteifungsträger als ein integrales, rahmenförmiges, die Versteifungsbereiche umfassendes Bauteil aus hoch- bis höchstfestem Stahlblech ausgebildet und warmumgeformt sind, und dass der Träger für die An- und Einbauaggregate über einen Aufnahmerahmen an dem Innenblech befestigt ist.

Die erfindungsgemäße Tür lässt sich mit vergleichsweise geringem Aufwand fertigen, weil das Innenblech und der dem Seitenaufprallschutz dienende Versteifungsträger einstückig, d.h. als integrales Bauteil ausgebildet sind und aus hochfestem bis höchstfestem Stahlblech bestehen. Wegen der Warmumformung lässt sich auch die gewünschte Profiltiefe des Bauteils erreichen. Das bedeutet, dass dieses integrale Bauteil der Tür nicht nur die gewünschte Eigensteifigkeit sondern auch den gewünschten Schutz bei einem Seitenaufprall gibt. Darüber hinaus können wegen des Einsatzes des hoch- bis höchstfesten Stahlbleches auch Türscharniere und dergleichen unmittelbar oder mittelbar an diesem Stahlblech angebracht werden. Separate Verstärkungselemente für Türscharniere oder dgl. sind nicht erforderlich.

Der gewünschte Umformgrad des hoch- bis höchstfesten Stahlbleches lässt sich in einem oder zwei Schritten erreichen. Bei einem einstufigen Umformen wird das Stahlblech auf Austenitisierungstemperatur erwärmt, warmumgeformt und gehärtet, insbesondere pressgehärtet. Bei einem zweistufigen Verfahren erfolgt zunächst eine Kaltumformung, wobei insbesondere der maximal mögliche Umformgrad möglicht ausgeschöpft werden sollte, und dann nach Erwärmung bis auf Austenitisierungstemperatur eine Warmumformung ggf. mit abschließender Härtung, insbesondere Presshärtung. Entsprechend der später im Betrieb zu erwartenden unterschiedlichen Beanspruchungen in einzelnen Bereichen des Bauteils können durch bereichsweise unterschiedliche Wärmebehandlungen des Bauteils unterschiedliche Härtezonen im Bauteil eingestellt werden. So kann das Innenblech in hochbelasteten Bereichen, insbesondere in Bereichen für Türfunktionselemente, partiell unterschiedliche Festigkeiten und Bruchdehnungen gegenüber den anderen Bereichen des Bauteils aufweisen. Durch den Einsatz eines von einem Aufnahmerahmen getragenen Trägers kann dieser ohne Rücksicht auf die wichtigen Anforderungen an die Tür hinsichtlich Steifigkeit und Seitenaufprallschutz ausschließlich nach den Anforderungen für die An- und Einbauaggregate gestaltet sein.

Nach einer ersten vorteilhaften Ausgestaltung der Erfindung ist vorgesehen, dass auch der Aufnahmerahmen aus hoch- bis höchstfestem Stahlblech ausgebildet und warmumgeformt ist. Durch den Einsatz von hoch- bis höchstfestem Stahlblech auch im Falle des Aufnahmerahmens kann auf das üblicherweise im Bereich des Fensterschachtes vorzusehenden Verstärkungsblech verzichtet werden, da die notwendige Steifigkeit bereits durch den Aufnahmerahmen selbst aufgebracht wird. Ferner können die für Türfunktionselemente, beispielsweise Türschloss und Türscharniere, vorgesehenen Verstärkungsbereiche aufgrund der hohen Festigkeit des Aufnahmerahmens auch an diesem selbst vorgesehen sein. Ebenso können die Verstärkungsbereiche sowohl am Innenblech als auch an dem aus hoch- bis höchstfestem Stahlblech gefertigten Aufnahmerahmen vorgesehen sein, was zu einer Erhöhung der Gesamtfestigkeit führt.

Falls ein Fensterrahmen an der Tür vorgesehen ist, so kann dieser schließlich entweder als integraler Bestandteil des Innenblechs oder als integraler Bestandteil des aus hoch- bis höchstfestem Stahlblech gefertigten Aufnahmerahmens ausgebildet sein.

Durch den Einsatz von hoch- bis höchstfestem Stahlblech auch bei dem Aufnahmerähmen ergibt sich insgesamt somit eine erhöhte konstruktive Freiheit bei der Türentwicklung.

Nach einer weiteren Ausgestaltung der Erfindung können der Träger für die An- und Einbauaggregate und der Aufnahmerahmen als einteiliges Bauteil ausgebildet sein.

Der Träger und/oder der Aufnahmerahmen können aus Stahlblech, Kunststoff oder einer Hybridstruktur (Metall/Kunststoff) bestehen. Da die Einbautiefe für die Aggregate praktisch allein durch den Aufnahmerahmen realisiert wird, kann dieser entweder aus weichem Tiefziehstahl, Aluminium, Kunststoff oder einer Hybridstruktur bestehen. Besonders bevorzugt wird jedoch wiederum der Einsatz von hoch- bis höchstfestem Stahlblech zur einteiligen Ausbildung des Trägers und des Aufnahmerahmens. In diesem Falle wirkt der Träger infolge seiner Festigkeit wie ein zusätzlicher integrierter Seitenaufprallschutz, so dass sich ein Insassenschutz bei einem Seitencrash sowohl durch den im Innenblech integrierten Versteifungsträger als auch durch den Träger ergibt.

Die Befestigung zwischen Innenblech und Aufnahmerahmen kann eine Punktschweiß- und/oder Schraub- und/oder Niet- und/oder Laserschweiß- und/oder Klebeverbindung sein.

Im Folgenden wird die Erfindung anhand einer ein Ausführungsbeispiel darstellenden Zeichnung näher erläutert. Im Einzelnen zeigen:
- Fig. 1: eine vordere linke Seitentür eines Kraftfahrzeuges bei überwiegend weggebrochenem Außenblech in Seitenansicht von außen,
- Fig. 2: ein Innenblech der Tür gemäß Fig. 1 in Ansicht von innen,
- Fig. 3: einen Aufnahmerahmen für einen Träger für An- und Einbauaggregate der Tür gemäß Fig. 1 in Seitenansicht von innen,
- Fig. 4: das Innenblech der Fig. 2 mit angebautem Aufnahmerahmen gemäß Fig. 3 in Seitenansicht von innen, und
- Fig. 5: das Innenblech gemäß Fig. 2 mit Aufnahmerahmen und zugehörigem Träger für An- und Einbaugeräte in Seitenansicht von innen.

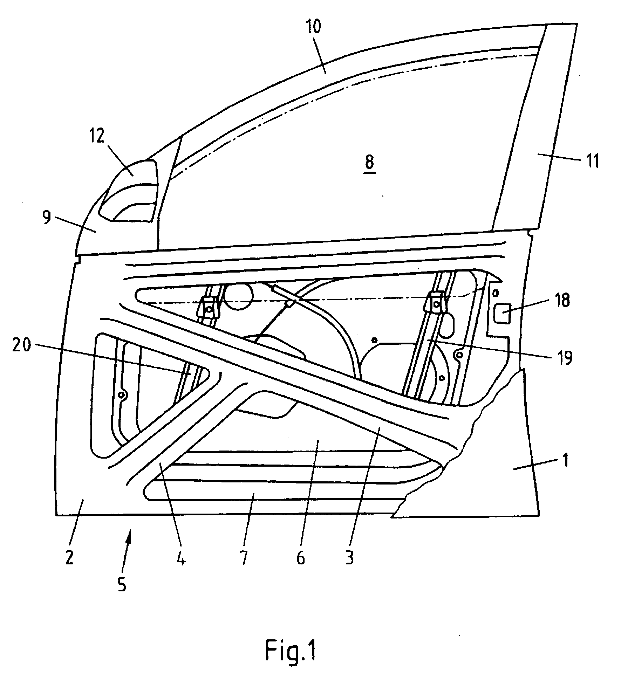

Die in Fig. 1 dargestellte Tür eines Kraftfahrzeuges umfasst ein Außenblech 1, ein aus einem rahmenförmigen Innenblech 2 und einem diagonal und quer dazu verlaufenden Versteifungsträger 3, 4 bestehendes Bauteil 5, einen Träger 6 für An- und Einbauaggregate sowie einen Rahmen 7 für den Träger 6. Der Rahmen des Innenbleches 2 ist im Bereich der Fensteröffnung 8 mit Blendleisten 9, 10, 11 verkleidet. In diesem Bereich trägt das Innenblech 2 auch einen Außenspiegel 12.

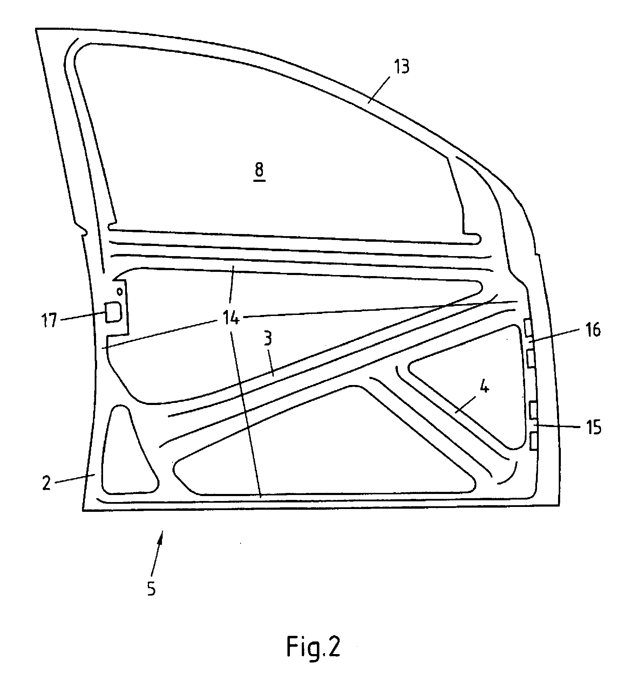

Das in Fig. 2 als Einzelheit gezeigte einteilige (integrale) Bauteil 5 aus Innenblech 2 und Versteifungsträger 3, 4 ist aus hoch- bis höchstfestem Stahlblech, insbesondere 900 bis 1800 N/mm², geformt. Die Formgebung erfolgt durch Warmumformen, insbesondere bei Austenitisierungstemperatur, wobei dem Warmumformen eine Kaltumformung mit möglichst großem Verformungsgrad vorgeschaltet sein kann. Anschließend findet eine Härtung, insbesondere Presshärtung statt. Unter Presshärtung ist eine Härtung durch indirekte Kühlung zu verstehen, die in geschlossenen Formwerkzeugen erfolgt. Im Rahmen der Härtung können bereichsweise unterschiedliche Härtegrade eingestellt werden. Aufgrund des ausgewählten Stahlbleches und der bei der Warmumformung erzielten Profilierung mit anschließender Härtung erhält man ein Bauteil 5 mit hoher Eigensteifigkeit und Widerstandskraft bei einem Seitenaufprall. Das Innenblech 2 weist im oberen Bereich einen Fensterrahmen 13 und im unteren Bereich einen Rahmen 14 mit dem diagonal und quer verlaufenden Versteifungsträger 3, 4 auf, der als Seitenaufprallschutz dient. Abweichend vom dargestellten Ausführungsbeispiel kann in einer alternativen Ausführung der Erfindung die Tür und damit auch das Innenblech 2 ohne Fensterrahmen ausgebildet sein. Die Vorteile der Erfindung bleiben erhalten.

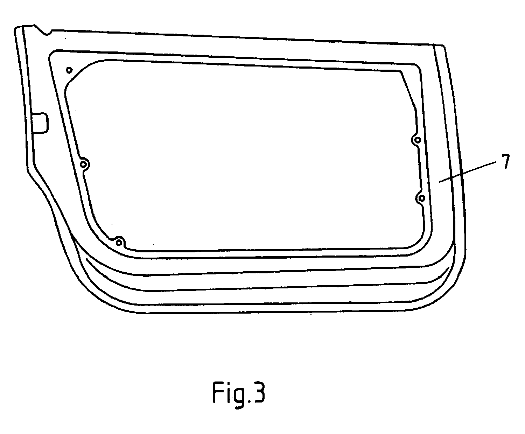

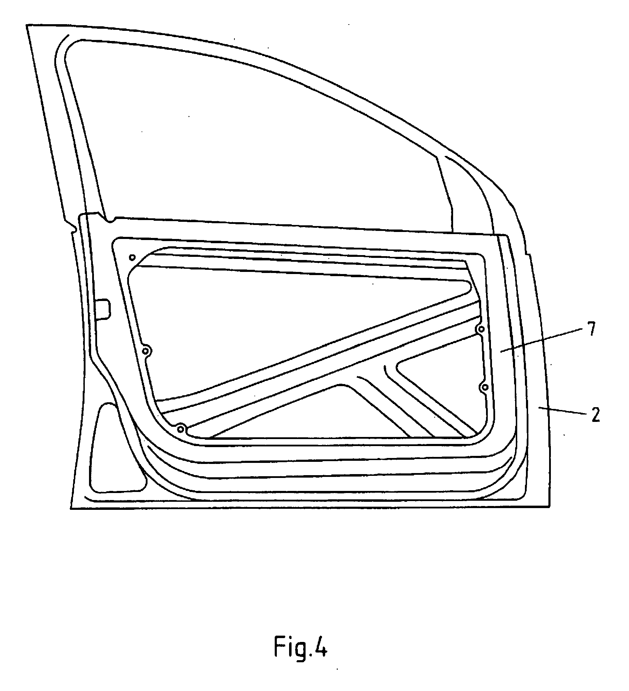

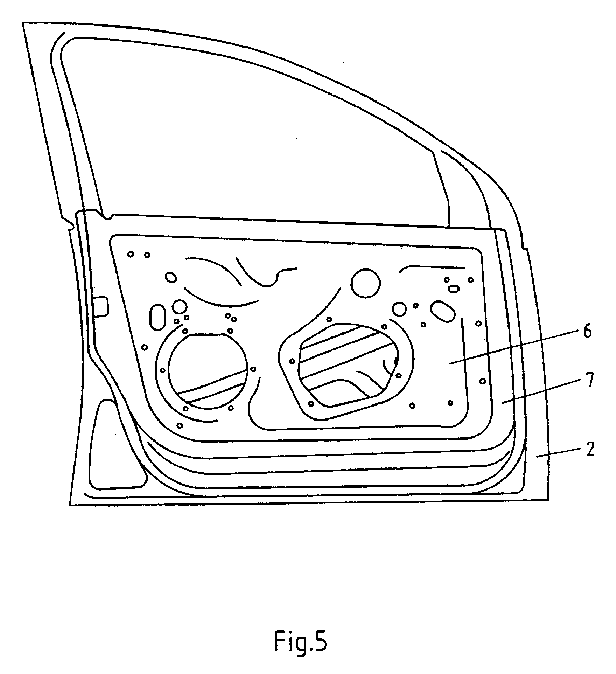

An dem Innenblech 2 sind im vorderen Bereich Verstärkungsbereiche 15, 16 für Türscharniere und im hinteren Bereich ein Verstärkungsbereich 17 für ein Türschloss als integrale Bestandteile des Innenbleches 2 ausgebildet. An dem unteren Bereich des Innenbleches 2 ist der Rahmen 7 (vgl. Fig. 3) insbesondere aus tiefgezogenem Stahlblech oder Kunststoff oder einer Hybridstruktur (Metall/Kunststoff) durch Punktschweißen und/oder Schrauben und/oder Nieten und/oder Laserschweißen und/oder Kleben befestigt. Auf diesem wiederum ist der plattenförmige Träger 6 für verschiedene Anund Einbauaggregate befestigt, z.B. angeschraubt (vgl. Fig. 4). In Fig. 1 und 5 sind verschiedene Ausnehmungen für solche Aggregate bzw. die Aggregate selbst angedeutet. Als An- und Einbauaggregate kommen Bedienelemente 18 für ein Türschloss, für Fensterheber, ein Fensterheberantrieb, Führungsschienen 19, 20 für die Fenster, Lautsprecher, u.dgl. in Betracht. Da der Träger 6 plattenförmig gestaltet ist, die An- und Einbauaggregate zum Teil aber eine erhebliche Einbautiefe benötigen, baut der Aufnahmerahmen 7 entsprechend hoch bzw. tief. Als Alternative zu der zweiteiligen Bauweise aus Träger 6 und offenem Rahmen 7 können beide Teile auch einteilig ausgebildet sein. Sie können aus tiefziehfähigem Stahl, Aluminium, Kunststoff oder einer Hybridstruktur (Metall/Kunststoff) hergestellt sein.

## Patentansprüche

1. Tür eines Kraftfahrzeuges, umfassend ein Außenblech (1), ein Innenblech (2), einen auf der Türinnenseite angeordneten plattenförmigen Träger (6) für verschiedene An- und Einbauaggregate sowie Verstärkungsbereiche (15, 16, 17) für Türfunktionselemente und einen eingebauten Versteifungsträger (3, 4) als Seitenaufprallschutz,
**dadurch gekennzeichnet, dass**
das Innenblech (2) und der Versteifungsträger (3, 4) als ein integrales, rahmenförmiges, die Verstärkungsbereiche (15, 16, 17) umfassendes Bauteil (5) aus hoch- bis höchstfestem Stahlblech ausgebildet und warmumgeformt sind, und dass der Träger (6) für die An- und Einbauaggregate über einen Aufnahmerahmen (7) an dem Innenblech (2) befestigt ist.

2. Tür nach Anspruch 1,
**dadurch gekennzeichnet, dass**
der Aufnahmerahmen (7) aus hoch- bis höchstfestem Stahlblech ausgebildet und warmumgeformt ist.

3. Tür nach Anspruch 1,
**dadurch gekennzeichnet, dass**
der Aufnahmerahmen (7) aus einem aus weichem Tiefziehstahl, Aluminium, Kunststoff oder einer Hybridstruktur besteht.

4. Tür nach einem der Ansprüche 1 bis 3,
**dadurch gekennzeichnet, dass**
der Träger (6) für die An- und Einbauaggregate und dessen Aufnahmerahmen (7) als einteiliges Bauteil ausgebildet sind.

5. Tür nach einem der Ansprüche 1 bis 4,
**dadurch gekennzeichnet, dass**
die Befestigung zwischen Innenblech (2) und Aufnahmerahmen (7) eine Punktschweiß- und/oder Schraubund/oder Niet- und/oder Laserschweiß- und/oder Klebeverbindung ist.

6. Tür nach einem der Ansprüche 1 bis 5,
**dadurch gekennzeichnet, dass**
das Innenblech (2) in hochbelasteten Bereichen, insbesondere in Bereichen (15, 16, 17) für Türfunktionselemente, partiell unterschiedliche Festigkeiten und Bruchdehnungen aufweist.

## Claims

1. Door of a motor vehicle, comprising an outer panel (1), an inner panel (2), a plateshaped support (6), which is disposed on the inner side of the door, for various attachment and installation units as well as reinforcement regions (15, 16, 17) for functional elements of the door and an installed stiffening support (3, 4) as sideimpact protection,
**characterised in that**
the inner panel (2) and the stiffening support (3, 4) are formed and hot-formed as an integral, frame-shaped component (5), which comprises reinforcement regions (15, 16, 17), consisting of high-strength to maximum-strength sheet steel and that the support (6) for the attachment and installation units is attached to the inner panel (2) by means of a receiving frame (7).

2. Door as claimed in claim 1,
**characterised in that**
the receiving frame (7) is formed and hot-formed from high-strength to maximum-strength sheet steel.

3. Door as claimed in claim 1,
**characterised in that**
the receiving frame (7) consists of one of soft deep drawing steel, aluminium, synthetic material or a hybrid structure.

4. Door as claimed in any one of claims 1 to 3,
**characterised in that**
the support (6) for the attachment and installation units and the receiving frame (7) thereof are formed as a one-piece component.

5. Door as claimed in any one of claims 1 to 4,
**characterised in that**
the attachment between the inner panel (2) and the receiving frame (7) is a spotwelded connection and/or a bolted connection and/or riveted connection and/or laserwelded connection and/or adhesive connection.

6. Door as claimed in any one of claims 1 to 5,
**characterised in that**
the inner panel (2) comprises partially different strengths and elongations at fracture in highly-loaded regions, in particular in regions (15, 16, 17) for functional elements of the door.

## Revendications

1. Porte pour un véhicule automobile, qui comprend une tôle extérieure (1), une tôle intérieure (2), un support (6) en forme de plaque, disposé sur la face intérieure de la porte pour différentes unités rapportées et encastrées, ainsi que des zones de renforcement (15, 16, 17) pour des éléments fonctionnels de porte et un support de raidissement (3, 4) en tant que protection latérale contre les impacts, **caractérisée en ce que** la tôle intérieure (2) et le support de raidissement (3, 4) sont réalisés en tôle d'acier, de résistance allant d'élevée à maximale, et sont formés à chaud, en tant que composant (5) d'une pièce, en forme de cadre, qui comprend les zones de renforcement (15, 16, 17), et que le support (6), pour les unités rapportées et encastrées, est fixé à la tôle intérieure (2) par l'intermédiaire d'un cadre de réception (7).

2. Porte selon la revendication 1, **caractérisée en ce que** le cadre de réception (7) est réalisé en tôle d'acier à résistance allant d'élevée jusqu'à maximale, et est formé à chaud.

3. Porte selon la revendication 1, **caractérisée en ce que** le cadre de réception (7) est fabriqué en acier d'emboutissage doux, en aluminium, en matière plastique ou consiste en une structure hybride.

4. Porte selon l'une des revendications précédentes, **caractérisée en ce que** le support (6) pour les unités rapportées et encastrées et leur cadre de réception (7) sont réalisés en tant que composant d'une pièce.

5. Porte selon l'une des revendications 1 à 4, **caractérisée en ce que** la fixation entre la tôle intérieure (2) et le cadre de réception (7) est une soudure ponctuelle et / ou une liaison à vis et / ou à rivets et ou une liaison par soudure au laser et / ou une liaison par collage.

6. Porte selon l'une des revendications 1 à 5, **caractérisée en ce que** la tôle intérieure (2) présente des degrés de résistance et d'allongement à la rupture partiellement différents.
